# EUROPÄISCHE PATENTSCHRIFT

(11) **EP 1 370 376 B1**
(45) Veröffentlichungstag und Bekanntmachung des Hinweises auf die Patenterteilung: **31.08.2005**
(21) Anmeldenummer: 02712930.3
(22) Anmeldetag: 28.02.2002
(51) Int. Cl.: B21B 31/07, F16J 15/32

(54) **DICHTUNGSVORRICHTUNG FÜR WALZENLAGER MIT AUSGLEICH RADIALEN VERSATZES**
SEALING DEVICE FOR ROLL BEARINGS WITH COMPENSATION FOR RADIAL OFFSET
DISPOSITIF D'ETANCHEITE POUR PALIER DE LAMINOIR A COMPENSATION DU DECALAGE RADIAL

(30) Priorität: 21.03.2001 DE 10113869
(43) Veröffentlichungstag der Anmeldung: 17.12.2003
(73) Patentinhaber: SMS Demag Aktiengesellschaft, 40237 Düsseldorf (DE)
(72) Erfinder: KELLER, Karl, 57271 Hilchenbach (DE); ROEINGH, Konrad, 57271 Hilchanbach (DE)
(74) Vertreter: Valentin, Ekkehard
(86) Internationale Anmeldenummer: PCT/EP2002/002119
(87) Internationale Veröffentlichungsnummer: WO 2002/076645

(56) Entgegenhaltungen:
- FR-A- 2 254 241
- US-A- 2 181 203
- US-A- 3 866 924
- US-A- 3 980 309
- US-A- 4 435 096
- US-A- 5 439 233

## Beschreibung

Die Erfindung betrifft eine Dichtungsvorrichtung im Bereich der Ballenseite von Walzenlagem, bei welcher dem Walzenzapfen mindestens ein diesen umgebendes, mit einer Dichtfläche zusammenwirkendes elastisches Dichtungselement zugeordnet ist, wobei das Dichtungselement von ortsfesten und die Dichtfläche von mit dem Walzenzapfen beweglichen bzw. das Dichtungselement von mit dem Walzenzapfen beweglichen und die Dichtfläche von ortsfesten Halterungen getragen werden.

Derartige Dichtungsvorrichtungen gehören insbesondere für Ölfilmlager z.B. durch die US-A-4,435,096 seit langem zum Stand der Technik. Die hier verwendeten Dichtungselemente sollen einerseits verhindern, dass das Öl aus dem Ölfilmlager zum Walzenballen hin gelangen kann und andererseits, dass das teilweise mit Sinter versetzte Kühl- und Schmiermittel von den Walzenballen in das Ölfilmlager eindringen kann.

Die US 3,980,309 offenbart einen Abstreifer für eine Säuberung von Gestängen, insbesondere Kolbenstangen von Arbeitszylindem oder dergleichen, wobei das Gestänge eine gradlinige Hin- und Herbewegung aber auch eine Drehbewegung durchführen kann. Um einen durch Abnutzung in der Führung der Stange auftretenden Fehler ausgleichen zu können wird ein als Abstreifer ausgebildetes Ringelement vorgeschlagen, welches aus hartem aber biegsamen Werkstoff besteht. Dieses Ringelement stützt sich auf einem weiteren Ringelement aus einem schmiegsamen, geschmeidigen Werkstoff ab, das zur Anpassung an seitliche Auslenkbewegungen des Gestänges vorgesehen ist. Ein Einsatz eines derartigen Abstreifers einer Kolbenstange von Arbeitszylindem oder dergleichen als Dichtungsvorrichtung für Walzenlager, bei denen durch regelmäßige Lastwechsel ständig unterschiedliche radiale Versetze auftreten ist nicht angeregt.

Durch die unterschiedlichen beim Walzvorgang auftretenden Belastungen kann es zu radialem Versatz der Walzenzapfen im Einbaustück kommen. Bei unbelasteten, nicht angestellten Walzen wird sich der Dichtungsspalt zwischen der Zapfenbuchse und der Lagerbuchse im unteren Bereich verringern, während sich der Spalt im entgegengesetzten oberen Bereich vergrößert. Ist die Walze dagegen angestellt, und wird Druck über die Einbaustücke und die Lager auf die Walze ausgeübt, so ergibt sich, dass der Lagerspalt zwischen Zapfenbuchse und Lagerbuchse im unteren Bereich größer wird, hingegen im entgegengesetzten oberen Bereich abnimmt. Dieser sich aus den unterschiedlichen Belastungen ergebende radiale Versatz muß beim Stand der Technik von den Dichtungselementen ausgeglichen werden.

Dabei wird im Falle der unbelasteten Walze die Dichtungslippe im unteren Bereich des Dichtungselementes sehr weit zusammengedrückt, während sich die Dichtungslippe im oberen Bereich kaum noch an die Dichtfläche anlegt. Im Falle der angestellten Walzen wird die Dichtungslippe dagegen im oberen Bereich des Dichtungselements sehr weit zusammengedrückt und liegt im unteren Bereich eventuell kaum noch an der Dichtfläche an.

Mit diesem radialen Spiel verbunden ist die stärkere Belastung und damit der größere Verschleiß der Dichtung einerseits im extrem zusammengepreßten Zustand sowie andererseits durch den ständigen Belastungswechsel, und weiterhin die Gefahr, dass die Dichtwirkung durch nicht optimal an der Dichtfläche anliegende Dichtungslippen stark nachläßt.

Die US-A-3,866,924 offenbart eine gattungsfremde Abstreifvorrichtung für sich axial bewegende Stangen bzw. Rohre. Hier werden mehrere hintereinander angeordnete, in axialer Richtung beanspruchte Dichtlippen offenbart, die sich über metallische Halteringe auf O-Ringen abstützen, die einen Versatz des Rohrs bzw. der Stange senkrecht zur Bewegungsrichtung ausgleichen sollen.

Der Erfindung liegt die Aufgabe zugrunde, eine gattungsgemäße Dichtungsvorrichtung so weiterzubilden, dass trotz radialen Versatzes des Walzenzapfens in der Lagerbuchse die Dichtungslippen der Dichtungselemente stets optimal an der Dichtfläche anliegen, ohne die Dichtungselemente über Gebühr zu beanspruchen und damit den Verschleiß der Dichtungselemente zu reduzieren und deren Lebensdauer zu erhöhen.

Zur Lösung dieser Aufgabe wird vorgeschlagen, dass sich das Dichtungselement und/oder die Dichtfläche über mindestens ein elastisches Stützelement auf ihrer Halterung abstützt, wobei das elastische Stützelement eine geringere Steifigkeit aufweist als die Dichtungslippe des Dichtungselementes. Kommt es in diesem Falle zu einem radialen Versatz, so wird sich die Dichtungslippe des Dichtungselementes zunächst im kleiner werdenden Dichtungsspalt nicht in ihrer Form ändern, sondern wegen ihrer größeren Steifigkeit die entsprechenden Kräfte auf das das Dichtungselement tragende elastische Stützelement übertragen, weiches in diesem Bereich des Dichtungsspaltes zusammengedrückt wird. Auf der gegenüberliegenden Seite wird sich das elastische Stützelement im größer werdenden Dichtungsspalt entsprechend ausdehnen, so dass auch hier die Dichtungslippe ohne größere Bewegung stets optimal an der Dichtfläche anliegt.

Es hat sich bewährt, dass die Steifigkeit des elastischen Stützelementes und/oder das Maß des radialen Ausgleichs vorgebbar einstellbar ist. Dadurch kann einerseits auf unterschiedlich steife Dichtungselemente reagiert werden und andererseits das elastische Stützelement an den zu erwartenden radialen Versatz angepaßt werden.

Von Vorteil ist, wenn das Dichtungselement und/oder die Dichtfläche auf ihrer Halterung durch Klemmmittel festgesetzt ist, wobei die Klemmmittel eine Bewegung des Dichtungselementes und/oder der Dichtfläche in radialer Richtung erlauben, während eine Bewegung der Dichtungselemente und/oder der Dichtfläche in Umfangsrichtung unterbunden wird. Dadurch wird erreicht, dass z.B. bei feststehendem Dichtungselement dieses nicht durch an der sich bewegenden Dichtfläche entstehende Reibkräfte mitgenommen werden kann, dass jedoch ein radialer Ausgleich gewährleistet ist.

Als elastische Stützelemente lassen sich O-Ringe oder auch geschlossene Schläuche denken, die z.B. mit einem Elastomer gefüllt sein können, um so einen optimalen Ausgleich radialen Versatzes zu gewährleisten.

Ein einfacher Einbau und ein einfacher Wechsel des Dichtungselementes und des elastischen Stützelementes ergibt sich, wenn das elastische Stützelement im Dichtungselement integriert ist, mit diesem eine Einheit bildet oder einstückig ausgebildet ist.

Von Vorteil ist, wenn das Klemmmittel und/oder die Flanken des Dichtungselementes und/oder der Dichtfläche, die mit dem Klemmmittel in Verbindung stehen, teflonbeschichtet sind. Dadurch ist ein radialer Versatz des Dichtungselements bzw. der Dichtfläche in ihren Halterungen möglich.

Um zu verhindern, dass das Dichtungselement und/oder die Dichtfläche in ihrer Halterung neben der gewünschten Radialbewegung eine Umfangsbewegung durchführen kann, hat es sich bewährt, dass die Klemmmittel und die Flanken der Dichtungselemente und/oder der Dichtfläche eine radial gerichtete Verzahnung bzw. Führungen aufweisen, wobei diese Führungen bzw. Verzahnungen klemmfrei ausgebildet sind.

Die Erfindung wird anhand einer Zeichnung näher erläutert. Dabei zeigen
- Figur 1: den Ausschnitt einer Walze mit Ölfilmlager und
- Figur 2: eine Detailansicht des Dichtungsbereichs.

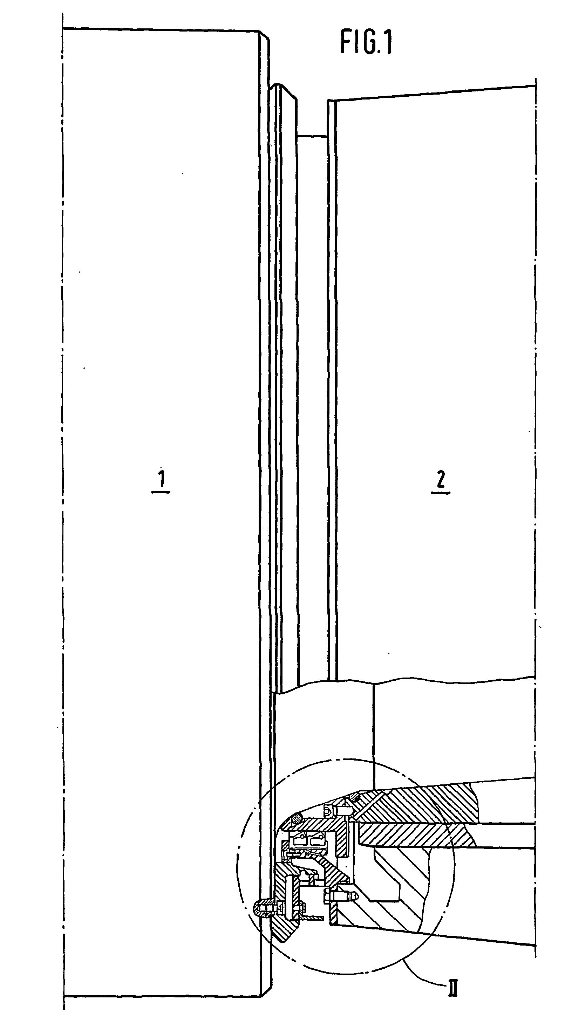

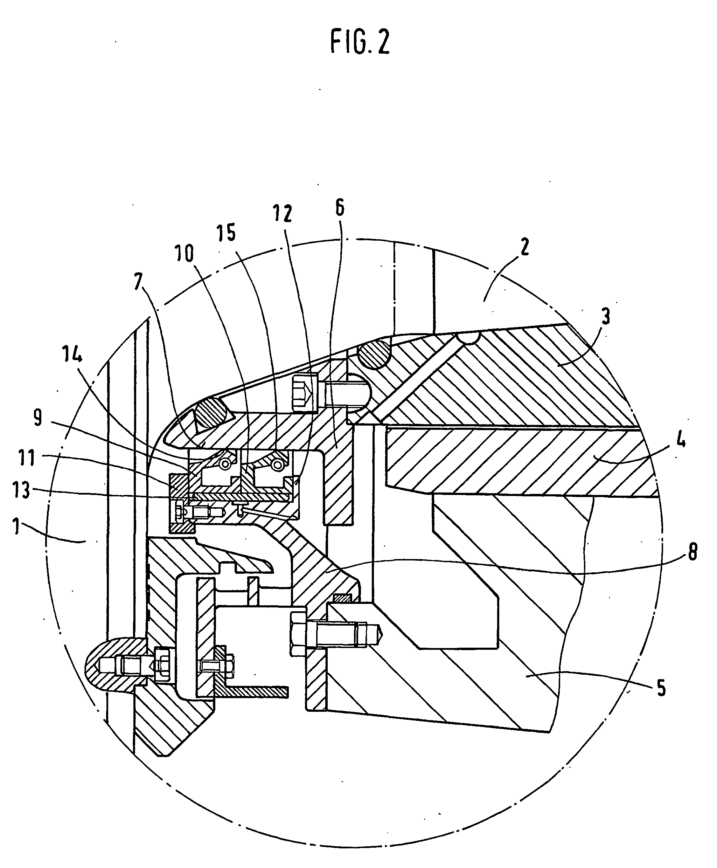

Der Figur 1 ist eine Walze 1 zu entnehmen, die einen Walzenzapfen 2 aufweist. Der Walzenzapfen 2 stützt sich, wie in Fig. 2 ersichtlich, mit seiner Zapfenbuchse 3 in der Lagerbuchse 4 ab, welche wiederum vom Einbaustück 5 getragen wird. An der Zapfenbuchse 3 ist eine Zapfenbuchsenverlängerung 6 zu erkennen, die die Dichtfläche 7 trägt. Am Einbaustück 5 ist eine Halterung 8 montiert, die dazu dient, die Dichtungselemente 9, 10 zu tragen. Dabei sind die Dichtungselemente 9, 10 durch ein Klemmmittel 11 gegen einen Anschlag 12 so verspannt, dass eine radiale Bewegung der Dichtungselemente 9, 10 möglich ist, deren Umfangsbewegung in der Halterung 8 jedoch verhindert wird. Zwischen der Halterung 8 und dem Dichtungselement 9, 10 ist ein elastisches Stützelement 13 angeordnet. Das elastische Stützelement 13 ist in Form eines geschlossenen Schlauchs ausgebildet, in den ein Elastomer eingefüllt ist.

Kommt es zu einem radialen Versatz des Walzenzapfens 2 und der Zapfenbuchse 3 zur Lagerbuchse 4 und dem Einbaustück 5, so müßten die Dichtungselemente 9, 10 diesen radialen Versatz ausgleichen. Da das elastische Element 13 jedoch eine geringere Steifigkeit aufweist als die Lippen 14, 15 der Dichtungselemente 9, 10 wird erreicht, dass das elastische Stützelement 13 den radialen Versatz aufnimmt, während die Dichtungslippen 14, 15 nicht verbogen werden. Dadurch wird gewährleistet, dass die Dichtungslippen 14, 15 stets so an der Dichtfläche 7 anliegen, dass eine optimale Dichtungswirkung erreicht wird. Hinzu kommt, dass bei dieser Stellung der Dichtungslippen 14, 15 ein minimaler Verschleiß derselben gewährleistet ist.

Das Beispiel zeigt lediglich, dass das Dichtungselement 9, 10 über das elastische Stützelement 13 abgestützt ist. Gegenstand der Erfindung ist aber auch, dass nur die Dichtfläche 7 über ein entsprechendes elastisches Stützelement auf der Zapfenbuchsenverlängerung 6 abgestützt ist, oder dass sowohl das Dichtungselement als auch die Dichtfläche über elastische Stützelemente getragen werden.

### Bezugszeichenübersicht

- 1: Walze
- 2: Walzenzapfen
- 3: Zapfenbuchse
- 4: Lagerbuchse
- 5: Einbaustück
- 6: Zapfenbuchsenverlängerung
- 7: Dichtfläche
- 8: Halterung
- 9: Dichtungselement
- 10: Dichtungselement
- 11: Klemmmittel
- 12: Ansatz
- 13: elastisches Stützelement
- 14: Dichtungslippe
- 15: Dichtungslippe

## Patentansprüche

1. Dichtungsvorrichtung zur Anordnung im Bereich der Ballenseite von Walzenlagem, umfassend eine ortsfeste Lagerbuchse (4), einen Walzenzapfen (2) sowie eine, den Walzenzapfen (2) haltemde bewegliche Zapfenbuchse (3), wobei dem Walzenzapfen (2) mindestens ein diesen umgebendes, mit einer Dichtfläche (7) zusammenwirkendes elastisches Dichtungselement (9, 10) zugeordnet ist, wobei das Dichtungselement (9, 10) von ortsfesten und die Dichtfläche (7) von mit dem Walzenzapfen (2) beweglichen bzw. das Dichtungselement (9, 10) von mit dem Walzenzapfen (2) beweglichen und die Dichtfläche (7) von ortsfesten Halterungen (8, 6) getragen werden, **dadurch gekennzeichnet, daß** sich das Dichtungselement (9, 10) und/oder die Dichtfläche (7) über mindestens ein elastisches Stützelement (13) auf ihrer Halterung (8) abstützt, wobei das elastische Stützelement (13) eine geringere Steifigkeit aufweist als die Dichtungslippen (14, 15) des Dichtungselements (9, 10) und wobei die Steifigkeit des elastischen Stützelements (13) und das Maß der radialen Ausgleichsbewegung des elastischen Stützelements (13) vorgebbar einstellbar ist.

2. Dichtungsvorrichtung nach Anspruch 1,
**dadurch gekennzeichnet,**
**dass** das Dichtungselement (9, 10) und/oder die Dichtfläche (7) auf ihrer Halterung (8) zwischen mindestens einem Klemmmittel (11) und ggf. einem Ansatz (12) festgelegt ist, wobei die Klemmverbindung eine Bewegung des Dichtungselements (9, 10) und/oder der Dichtfläche in radialer Richtung erlaubt, während eine Bewegung des Dichtungselementes (9, 10) in Umfangsrichtung unterbunden wird.

3. Dichtungsvorrichtung nach Anspruch 1 oder 2,
**dadurch gekennzeichnet, dass** als elastisches Stützelement (13) mindestens ein O-Ring Anwendung findet.

4. Dichtungsvorrichtung nach Anspruch 1 oder 2,
**dadurch gekennzeichnet,**
**dass** als elastisches Stützelement (13) mindestens ein geschlossener Schlauch Anwendung findet.

5. Dichtungsvorrichtung nach Anspruch 3 oder 4,
**dadurch gekennzeichnet,**
**dass** der Schlauch bzw. der O-Ring mit einem Elastomer gefüllt ist.

6. Dichtungsvorrichtung nach einem der Ansprüche 1 bis 5,
**dadurch gekennzeichnet,**
**dass** das elastische Stützelement (13) mit dem Dichtungselement (9, 10) eine Einheit bildet.

7. Dichtungsvorrichtung nach einem der Ansprüche 1 bis 6,
**dadurch gekennzeichnet,**
**dass** das Klemmmittel (11) und ggf. der Ansatz (12) und/oder die Flächen des Dichtungselements (9, 10) und/oder der Dichtfläche (7), die mit dem Klemmmittel (11) und ggf. dem Ansatz (12) in Verbindung stehen, teflonbeschichtet sind.

8. Dichtungsvorrichtung nach einem der Ansprüche 1 bis 7,
**dadurch gekennzeichnet,**
**dass** mindestens das Klemmmittel (11) und die Fläche des Dichtungselements (9, 10), und/oder der Dichtfläche (7), die mit dem Klemmmittel (11) in Verbindung stehen, eine radial gerichtete Verzahnung bzw. Führungen aufweisen.

9. Dichtungsvorrichtung nach einem der Ansprüche 1 bis 8,
**dadurch gekennzeichnet,**
**dass** als Dichtungselement (9, 10) Radialwellendichtringe Anwendung finden.

10. Dichtungsvorrichtung nach einem der Ansprüche 1 bis 9,
**dadurch gekennzeichnet,**
**dass** zwei Dichtungselemente (9, 10) auf der Halterung (8) angeordnet sind.

## Claims

1. Sealing device for arrangement in the region of the circumferential surface side of roll bearings, comprising a stationary bearing bush (4), a roll pin (2) as well as a movable pin bush (3) mounting the roll pin (2), wherein at least one resilient sealing element (9, 10) surrounding the roll pin (2) and co-operating with a sealing surface (7) is associated with the roll pin, wherein the sealing element (9, 10) is carried by stationary mounts (8, 6) and the sealing surface (7) by mounts (8, 6) movable with the roll pin (2) or the sealing element (9, 10) is carried by mounts (8, 6) movable with the roll pin (2) and the sealing surface (7) by stationary mounts (8, 6), **characterised in that** the sealing element (9, 10) and/or the sealing surface (7) is supported on its mount (8) by way of at least one resilient support element (13), wherein the resilient support element (13) has a lesser stiffness than that the sealing lips (14, 15) of the sealing element (9, 10) wherein the stiffness of the resilient support element (13) and the amount of the radial compensating movement of the resilient support element (13) is settable in predeterminable manner.

2. Sealing device according to claim 1, **characterised in that** the sealing element (9, 10) and/or the sealing surface (7) is or are fixed on the mount (8) thereof between at least one clamping means (11) and optionally a projection (12), wherein the clamping connection allows movement of the sealing element (9, 10) and/or the sealing surface in radial direction, whilst movement of the sealing element (9, 10) in circumferential direction is precluded.

3. Sealing device according to claim 1 or 2, **characterised in that** at least one O-ring is used as resilient support element (13).

4. Sealing device according to claim 1 or 2, **characterised in that** at least one closed hose is used as resilient support element (13).

5. Sealing device according to claim 3 or 4, **characterised in that** the hose or the O-ring is filled with an elastomer.

6. Sealing device according to one of claims 1 to 5, **characterised in that** the resilient support element (13) together with the sealing element (9, 10) forms a unit.

7. Sealing device according to one of claims 1 to 6, **characterised in that** the clamping means (11) and optionally the projection (12) and/or the surfaces of the sealing element (9, 10) and/or the sealing surface (7), which is connected with the clamping means (11) and optionally with the projection (12) is or are coated with Teflon.

8. Sealing device according to one of claims 1 to 7, **characterised in that** at least the clamping means (11) and the surface of the sealing element (9, 10), and/or the sealing surface (7) connected with the clamping means (11), have or has a radially directed toothing or guides.

9. Sealing device according to one of claims 1 to 8, **characterised in that** rotary shaft seals are used as sealing element (9, 10).

10. Sealing device according to one of claims 1 to 9, **characterised in that** two sealing elements (9, 10) are arranged on the mount (8).

## Revendications

1. Dispositif d'étanchéité destiné à être agencé dans la zone du côté corps de paliers de cylindre, comportant un coussinet stationnaire (4), un tourillon de cylindre (2) ainsi qu'une douille à tourillon (3) mobile retenant le tourillon de cylindre, dans lequel au moins un élément d'étanchéité élastique (9, 10) coopérant avec une surface d'étanchéité (7) et entourant le tourillon de cylindre (2) est associé à ce dernier, l'élément d'étanchéité (9, 10) est porté par des montures stationnaires (8, 6) et la surface d'étanchéité (7) est portée par des montures (8, 6) mobiles avec le tourillon de cylindre (2) ou l'élément d'étanchéité (9, 10) est porté par des montures (8, 6) mobiles avec le tourillon de cylindre (2) et la surface d'étanchéité (7) est portée par des montures stationnaires (8, 6), **caractérisé en ce que** l'élément d'étanchéité (9, 10) et/ou la surface d'étanchéité (7) est soutenu(e) par au moins un élément de soutien élastique (13) sur sa monture (8), l'élément de soutien élastique (13) présentant une rigidité inférieure à celle des lèvres d'étanchéité (14, 15) de l'élément d'étanchéité, et la rigidité de l'élément de soutien élastique (13) et la valeur du mouvement de compensation radial de l'élément de soutien élastique (13) étant réglables de façon prédéterminée.

2. Dispositif d'étanchéité selon la revendication 1, **caractérisé en ce que** l'élément d'étanchéité (9, 10) et/ou la surface d'étanchéité (7) est immobilisé(e) sur sa monture (8) entre au moins un moyen de coincement (11) et le cas échéant un talon (12), la liaison par coincement permettant un mouvement de l'élément d'étanchéité (9, 10) et/ou de la surface d'étanchéité en direction radiale, tandis qu'elle interdit un mouvement de l'élément d'étanchéité (9, 10) en direction périphérique.

3. Dispositif d'étanchéité selon l'une ou l'autre des revendications 1 et 2, **caractérisé en ce qu'**au moins un joint torique est utilisé comme élément de soutien élastique (13).

4. Dispositif d'étanchéité selon l'une ou l'autre des revendications 1 et 2, **caractérisé en ce qu'**au moins un tuyau flexible fermé est utilisé comme élément de soutien élastique (13).

5. Dispositif d'étanchéité selon l'une ou l'autre des revendications 3 et 4, **caractérisé en ce que** le tuyau flexible ou le joint torique est rempli d'un élastomère.

6. Dispositif d'étanchéité selon l'une des revendications 1 à 5, **caractérisé en ce que** l'élément de soutien élastique (13) forme une unité avec l'élément d'étanchéité (9, 10).

7. Dispositif d'étanchéité selon l'une des revendications 1 à 6, **caractérisé en ce que** le moyen de coincement (11) et le cas échéant le talon (12) et/ou les surfaces de l'élément d'étanchéité (9, 10) et/ou la surface d'étanchéité (7) qui sont en liaison avec le moyen de coincement (11) et le cas échéant avec le talon (12) sont revêtus de téflon.

8. Dispositif d'étanchéité selon l'une des revendications 1 à 7, **caractérisé en ce qu'**au moins le moyen de coincement (11) et la surface de l'élément d'étanchéité (9, 10) et/ou de la surface d'étanchéité (7) qui sont en liaison avec le moyen de coincement (11) présentent une denture dirigée radialement ou des guidages dirigés radialement.

9. Dispositif d'étanchéité selon l'une des revendications 1 à 8, **caractérisé en ce que** des joints d'étanchéité annulaires à ondulation radiale sont utilisés à titre d'élément d'étanchéité (9, 10).

10. Dispositif d'étanchéité selon l'une des revendications 1 à 9, **caractérisé en ce que** deux éléments d'étanchéité (9, 10) sont agencés sur la monture (8).
